# EUROPÄISCHE PATENTANMELDUNG

(11) **EP 0 955 461 A2**
(43) Veröffentlichungstag der Anmeldung: **10.11.1999**
(21) Anmeldenummer: 99106672.1
(22) Anmeldetag: 01.04.1999
(51) Int. Cl.: F03D 11/00, F03D 1/06

(54) **Rotorblattsatz für Windkraftanlage**

(30) Priorität: 04.05.1998 DE 29807874 U
(71) Anmelder: Husumer Schiffswerft Inh. Gebrüder Kröger GmbH & Co.KG, 25813 Husum (DE)
(72) Erfinder: Trede, Alf, 25885 Immenstedt (DE)
(74) Vertreter: Glaeser, Joachim, Dipl.-Ing.

(57) **Zusammenfassung**

Rotorblattsatz für Windkraftanlage zur Elektrizitätserzeugung, aufweisend drei an einer gemeinsamen Rotornabe befestigte Rotorblätter mit gleicher Masse, gleichem Massenschwerpunkt, gleichem aerodynamischen Profil und gleicher Eigenfrequenz in Schlagrichtung. Mindestens eines der drei auf einer Rotornabe befestigten, einen Satz bildenden Rotorblätter hat eine Eigenfrequenz in Schwenkrichtung, die von der der anderen Rotorblätter abweicht.

## Beschreibung

Die Erfindung bezieht sich auf einen Rotorblattsatz für Windkraftanlage zur Elektrizitätserzeugung, aufweisend drei an einer gemeinsamen Rotornabe befestigte Rotorblätter mit gleicher Masse, gleichem Massenschwerpunkt, gleichem aerodynamischen Profil und gleicher Eigenfrequenz in Schlagrichtung.

Rotorblätter von Windkraftanlagen sind selbstredend höchsten mechanischen Beanspruchungen ausgesetzt, wozu auch Resonanzfrequenzbeanspruchungen gehören, die dadurch bedingt sind, daß drei Rotorblätter an einer gemeinsamen Rotornabe befestigt sind und so gemeinsam ein schwingungsfähiges System bilden.

Ein Rotorblatt für eine Windkraftanlage hat unterschiedliche Eigenfrequenzen und zwar in Schlag- und in Schwenkrichtung. Bei stark wechselnder Windbeanspruchung kann insbesondere das Schwingungsverhalten des gesamten schwingungsfähigen Systems sich derart auswirken, daß in Schwenkrichtung jeweils zwei Rotorblätter parallel zueinander schwingen, wobei sich die Blätter bei der Paarbildung nacheinander abwechseln.

Durch aeroelastische Verformung der Rotorblätter in Schwenkrichtung und sich eine daraus ergebene Verlagerung des Stallpunktes kann es zu einer Anregung im Bereich der Schwenkeigenfrequenz der Rotorblätter kommen, und dieses erst jüngst intensiv beschriebene Phänomen kann zu erheblichen Beschädigungen der Rotorblätter bis hin zum Blattabwurf führen.

Die bislang zur Verfügung stehenden Gegenmaßnahmen bekämpfen nur das eigentliche aeroelastische Schwingungsphänomen, also das sich entwickelnde Symptom, nicht die eigentliche Ursache. Wenn beispielsweise über Schwingungssensoren derartige gefährliche Schwingungszustände erfaßt werden und die Anlage kurzfristig abgestellt wird, so kann es sich hierbei nur um eine wenig sinnvolle Lösung des Problems handeln. Auch der Einsatz von Stall-Strips, die die Strömung am Rotorblatt verändern sollen und so dem Schwingungsphänomen entgegenwirken oder das Anbringen von Schwingungsdämpfern im Blattaußenbereich stellen Lösungsansätze dar, die nicht zufriedenstellen können. Man darf hierbei nicht übersehen, daß die Überwachung von Schwingungsvorgängen eigentlich erst dann möglich ist, wenn diese Schwingungen eben schon eingetreten sind, d.h. zu einem Zeitpunkt, wo durch die erhöhten Belastungen die Blattstruktur schon Schaden genommen haben könnte.

Bei der Lösung gemäß der vorliegenden Erfindung, so wie diese in den Ansprüchen charakterisiert worden ist, können aufgabengemäß die Ursachen unerwünschter Schwingungsvorgänge angegangen werden, und zwar ohne daß unerwünschte Stillstandszeiten und/oder Bremsvorgänge erforderlich sind und ohne daß die Leistung der Windkraftanlage dabei beeinträchtigt wird.

Das Prinzip der vorliegenden Erfindung ist in wenigen Worten darin zu sehen, daß die Schwingungseigenschaften der Rotorblätter in Schwenkrichtung unterschiedich ausgestaltet werden, so daß sich bei einem Satz von Rotorblättern auf einer gemeinsamen Rotornabe keine derartigen einschwingungsfähigen Systeme bilden können.

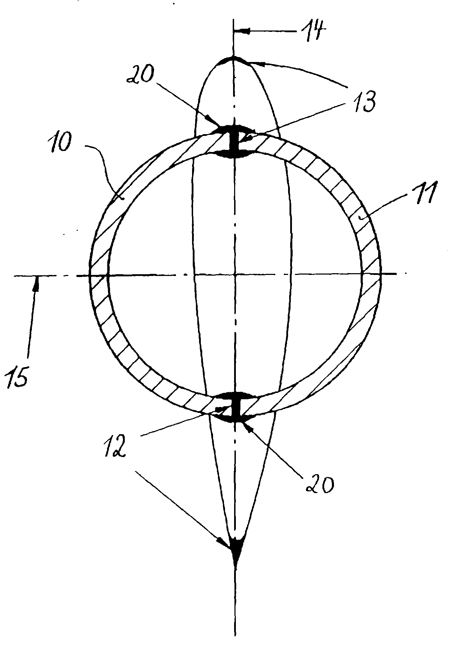

Die Erfindung wird nachstehend anhand der Zeichnung beispielsweise erläutert.

Diese zeigt eine Querschnittsansicht durch den zylindrischen Teil eines Rotorblattes, die eine Draufsicht auf den blattförmigen Teil des Rotorblattes gestattet.

Mit 10 und 11 sind die beiden Halbschalen des Rotorblatts bezeichnet, welche bei 12 und 13 in Blattlängsrichtung miteinander verklebt worden sind. Gemäß der Erfindung befinden sich nun in diesen Verklebungsbereichen der beiden Blattschalen zusätzliche Laminate 20, wobei diese Zusatzlaminate für die einzelnen Blätter eines Blattsatzes unterschiedlich ausgestaltet sind, z.B. wenn man die Ausrichtung der Kett-Schußrichtung des Gewebes in Bezug auf die Schlagrichtung betrachtet. Dies bedeutet, daß die Blätter in ihren Eigenschaften zueinander, mit Ausnahme jedoch ihrer Eigenresonanzfrequenz, in Schwenkrichtung identisch sind.

Zur weiteren Erläuterung wird auf die Linie 15 verwiesen, die die neutrale Phase in Schwenkrichtung also die Schlagrichtung repräsentiert. Die Linie 14 stellt die neutrale Phase in Schlagrichtung also die Schwenkrichtung dar.

Es ist daher ersichtlich, daß durch das Anbringen eines Zusatzlaminates 20 lediglich die Resonanzfrequenz in Schwenkrichtung 14 beeinflußt wird, die Eigenschaften des Rotorblattes in Schlagrichtung 15 wird davon nicht berührt. Das Zusatzlaminat an einem Rotorblatt kann sich hinsichtlich des Zusatzlaminates an einem anderen Rotorblatt in der Faserorientierung und/oder der Werkstoffart unterscheiden.

## Patentansprüche

1. Rotorblattsatz für Windkraftanlage zur Elektrizitätserzeugung, aufweisend drei an einer gemeinsamen Rotornabe befestigte Rotorblätter mit gleicher Masse, gleichem Massenschwerpunkt, gleichem aerodynamischen Profil und gleicher Eigenfrequenz in Schlagrichtung, dadurch gekennzeichnet, daß mindestens eines der drei auf einer Rotornabe befestigten, einen Satz bildenden Rotorblätter eine Eigenfrequenz in Schwenkrichtung hat, die von der der anderen Rotorblätter abweicht.

2. Rotorblattsatz für Windkraftanlage, dadurch gekennzeichnet, daß jeweils in oder an mindestens einer der Verklebungsstellen (12, 13) der Blattschalen (10, 11) eines Rotorblattes ein Zusatzlaminat (20) angebracht ist, das sich hinsichtlich der Eigenschaften und/oder der Strukturen von denen der anderen Zusatzlaminate unterscheidet.

3. Rotorblattsatz nach Anspruch 2, dadurch gekennzeichnet, daß die Laminate (20) sich hinsichtlich der Ausrichtung ihrer Kett-Schußrichtung ihrer Gewebe unterscheiden.
